# EUROPEAN PATENT SPECIFICATION

(11) **EP 3 008 995 B1**
(45) Date of publication and mention of the grant of the patent: **13.06.2018**
(21) Application number: 15755759.6
(22) Date of filing: 20.02.2015
(51) Int. Cl.: A01K 61/00

(54) **METHOD OF CULTURING ORGANISM TO BE CULTURED, AND CULTURING FACILITY**
VERFAHREN ZUR KULTIVIERUNG VON ZU KULTIVIERENDEN ORGANISMEN UND KULTIVIERUNG ANLAGE
MÉTHODE DE CULTURE D'ORGANISME À CULTIVER, ET INSTALLATION DE CULTURE

(30) Priority: 28.02.2014 JP 2014037821; 18.02.2015 JP 2015029804
(43) Date of publication of application: 20.04.2016
(73) Proprietor: Yanmar Co., Ltd., Osaka-shi, Osaka 530-8311 (JP)
(72) Inventor: NAIKI, Toshihito, Osaka-shi, Osaka 530-8311 (JP); KATO, Motoichi, Osaka-shi, Osaka 530-8311 (JP)
(74) Representative: Hinkelmann, Klaus
(86) International application number: PCT/JP2015/054828
(87) International publication number: WO 2015/129582

(56) References cited:
- JP-A- H03 180 128
- JP-A- H03 180 128
- JP-A- S63 309 122
- JP-A- 2005 253 424
- JP-B2- 3 527 428
- JP-B2- 4 242 236
- JP-Y1- S4 314 457
- US-A- 3 477 406
- US-A- 3 495 572
- US-A1- 2011 220 032

## Description

### Technical Field

The present invention relates to a method for culturing organisms to be cultured, which is most suitable for shellfishes such as bivalves, and a culture system therefor.

### Background Art

For example, in order to culture bivalves such as Crassostrea gigas (oysters), culture methods respectively using an intertidal zone and the other area of the sea are widely adopted. Here, the intertidal zone means a zone between the high-water mark and the low-water mark of the shore.

As the culture methods using the intertidal zone, for example, a method for installing culture baskets or plastic bags containing oysters on the shore (ground) is known. Such a culture method is to culture oysters using a tideland as the result of the natural ebb and flow of the tide.

As the method for culturing oysters using the other area of the sea, for example, a suspension culture method is known. In this method, a culture rope is suspended from a culture system such as a raft and a longline. Seedling collectors, to which attached spats, are connected to the culture rope at intervals. Also, a culture method using a culture system submerged in the outer sea along the coast is known. In this method, the culture system is constituted by a gravity-type fish reef and a floating culture part thereabove (see, for example, Patent Document 1).

Also, a system for culturing shellfishes in which culturing means are replaceable is known. This culture system is submerged in the sea for use, and has a submerged housing in which the culturing means containing shellfish culture substrates are removably mounted. (see, for example, Patent Document 2).

### Prior Art Documents

### Patent Documents

[Patent Document 1] JP 2004-222650 A
[Patent Document 2] JP 2004-166523 A

US 3,495,572 discloses a method of raising pompano to marketable adult size which comprises providing an elongated pond open at each end to tidal flow and screened at each end, obtaining a large number of juvenile pompano from their natural habitat and introducing them into said pond, controlling the water level, temperature and salinity of the water in said pond at optimum levels, utilizing the flow of the tide to introduce fresh sea water containing oxygen, minerals and natural food into said pond, utilizing the ebb of said tide to remove oxygen depleted water and excrement, and providing supplemental food in said pond to supplement the natural food introduced into the pond by tidal flow whereby the juvenile fish will grow to adult size in a comparatively short period of time.

JP H03 180128 A discloses a device of rearing tank for abalones. Plural rearing cages having each detachable horizontal corrugated plates with an interval from the cage bottom are detachably supported in a rearing tank equipped with a draining device in the lower part on an outer surface of a sidewall. A water feed pipe having plural upward water sprinkling holes is arranged under each corrugated plate. A main drain valve and an auxiliary drain valve are then closed to keep the interior of the tank at a high water level with the first siphon draining passage.

### Summary of Invention

### Problem to be Solved by Invention

In the above culture method using the intertidal zone, in which the bags containing oysters are installed on the shore, the length of time and the time zone to perform maintenance works such as cleaning are restricted due to the natural tidal activity. Furthermore, the culture method using the intertidal zone should leave cultivation to the natural tidal activity. Thus, if the oysters are cultured in the intertidal zone through the year, the shells grow slowly. Consequently, with this method, it takes long time to produce marketable size oysters.

In the culture method using the area of the sea other than the intertidal zone recited, for example, in Patent Document 1, the oysters are always submerged in the sea. Thus, periphyton (e.g. ascidians and barnacles) is likely to adhere onto the shells of the oysters.

Also, there is a problem of depletion in a high water temperature period mainly in summer. That is, the high water temperature (e.g. 25°C or more) is likely to cause mass mortality of the oysters. This is the biggest problem in the suspension cultures, particularly in western Japan. The oysters are being suspended in the sea to be cultured in an environment where the oysters can feed at any time. And the high water temperature period naturally comes in summer. The oysters need a large quantity of food accompanied by considerable increase of the metabolic rate. As the result, an individual that cannot feed well is getting weaker and finally dies.

Furthermore, in the high water temperature period, other organisms such as ascidians and barnacles also increase their activity. Thus, a large number of the above competitors over food are highly likely to adhere onto the shells of the oysters, which affects the growth of the oysters.

The oysters are distributed to customers with or without shells. Since the oysters with shells are particularly suitable for improvement of their commercial values, the cultivation of oysters with shells having a beautiful appearance is desired.

In consideration of the above circumstances, an object of the present invention is to provide: a method for culturing organisms to be cultured by providing an optimal water level for survival and growth of shellfishes such as oysters so as to shorten a culture period and reduce depletion in a high water temperature period; and a culture system therefor.

### Means for Solving Problem

The present invention, which was made to resolve the above problems, provides a method for culturing organisms to be cultured. The method includes the following steps: disposing a culture bed surface in a culturing area of which a water level is adjustable so that the culture bed surface has a predetermined height from a bottom surface of the culturing area; placing the organisms to be cultured such as shellfishes on the culture bed surface; separating the culturing area apart from the open see by an embankment; controlling a height of the water surface of the culturing area using a natural tidal activity by opening/closing sluice gate equipment constituting a part of the embankment; and adjusting the water level of the culturing *area* so that the water level is controlled to realize a dry state in which the organisms to be cultured on the culture bed surface are exposed from a water surface and an in-water state in which the organisms to be cultured are submerged in the water.

In the above-described method for culturing organisms to be cultured, the water level of the culturing area is adjusted so that the water level is controlled to realize the dry state in which the organisms to be cultured on the culture bed surface are exposed from the water surface and the in-water state in which the organisms to be cultured are submerged in the water. Thus, the most suitable water level for survival and growth of the organisms to be cultured can be provided according to the change in the water temperature. As the result, it is possible to shorten the culture period in the culturing area and to reduce depletion in the high water temperature period.

Since the dry state in which the organisms to be cultured are exposed from the water surface can be controlled, it is possible to dry the exposed organisms to be cultured using the dry state. Thus, it is possible to prevent competitors over food from adhering to the organisms to be cultured.

The above-described method for culturing organisms to be cultured is further characterized in that the culturing area is separated apart from the open sea by an embankment, and that a height of the water surface of the culturing area is controlled using a natural tidal activity by opening/closing sluice gate equipment constituting a part of the embankment.

The above-described method for culturing organisms to be cultured is further characterized in that the culture bed surface is disposed at a height between a tidal level at high tide of the open sea and a tidal level at low tide of the open sea.

The above-described method for culturing organisms to be cultured is further characterized in that when a water temperature around a culture rack is a predetermined temperature or more, the water level is controlled to lengthen a dry time compared with the dry time when the water temperature is lower than the predetermined temperature.

The above-described method for culturing organisms to be cultured is further characterized in that the culture bed surface is a net through which water passes, and that the culture bed surface is separated apart from the bottom surface of the culturing area by 500 mm or more in a height direction.

The above-described method for culturing organisms to be cultured is further characterized in that the organisms to be cultured are oysters.

The above-described method for culturing organisms to be cultured is further characterized in that a culture density of the organisms to be cultured on the culture bed surface is controlled by changing a surface area for culture according to growth of the organisms to be cultured so as to maintain a predetermined population density of the organisms to be cultured. In this case, since the dry state in which the organisms to be cultured are exposed from the water surface can be controlled, it is possible to simplify operations for controlling the density of the organisms to be cultured on the culture bed surface in the dry state. Thus, working times, which have conventionally been affected by the tidal activity of the open sea, can be artificially controlled.

The above-described method for culturing organisms to be cultured is further characterized in that the culture bed surface is a floor surface of the culture rack formed in a rack-like shape by a long net plate.

The above-described method for culturing organisms to be cultured is further characterized in that the culture bed surface is a bottom surface of a culture basket formed in a tube-like shape by a net plate.

A culture system according to claim 10 for performing the above-described method for culturing organisms to be cultured includes: an embankment for forming a culturing area of the sea separated from the open sea; sluice gate equipment constituting a part of the embankment, the sluice gate equipment capable of communicating the culturing area with the open sea and shutting the culturing area off from the open sea; a driver for driving the sluice gate equipment; and a sluice gate control unit for controlling the driver, including a memory that stores a time schedule of tidal activity according to the tide table, and a timer. The sluice gate equipment is configured to move a sluice gate up and down so that the sluice gate is opened/closed.

With the above-described culture system for organisms to be cultured, it is possible, for example, to automate the culture of oysters using the natural tidal activity.

The above-described culture system for organisms to be cultured is characterized in that it further includes a temperature detector for detecting a water temperature of the culturing area, and that the sluice gate control unit controls, based on a detection signal from the temperature detector, the opening and closing of the sluice gate equipment so as to lengthen or shorten a time for the dry state compared with a predetermined basic time.

### Effects of Invention

With the present invention, the most suitable water level for survival and growth of the organisms to be cultured such as shellfishes can be provided according to the change in the water temperature. Thus, it is possible to shorten the culture period and to reduce depletion in the high water temperature period. Also, the dry state in which the organisms to be cultured are exposed from the water surface can be controlled. Thus, it is possible to dry the exposed organisms to be cultured and to prevent competitors over food from adhering to the organisms to be cultured. Consequently, it is possible to improve the commercial values of the organisms to be cultured.

### Brief Description of Drawings

[FIG. 1]

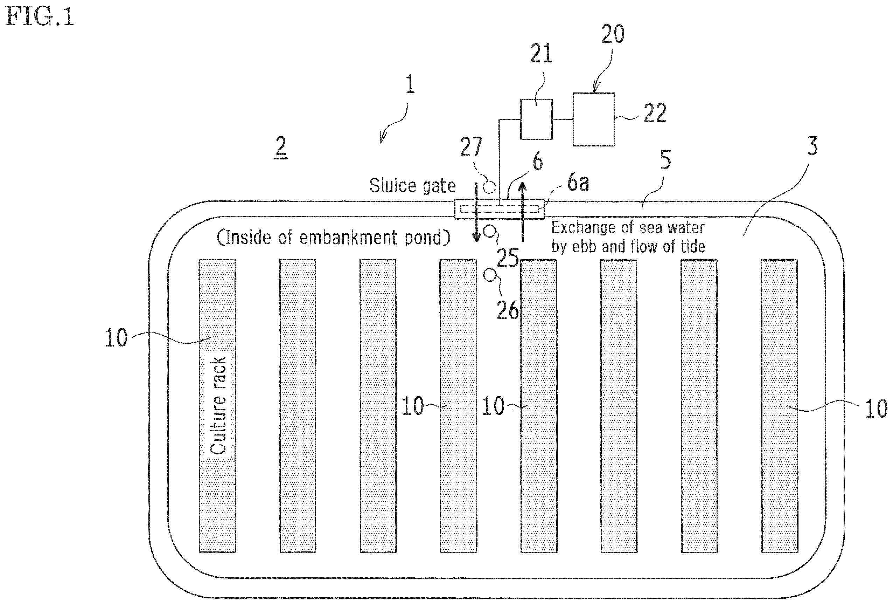

   FIG. 1 is a plan view schematically showing a culture system according to one embodiment of the present invention.
[FIG. 2]

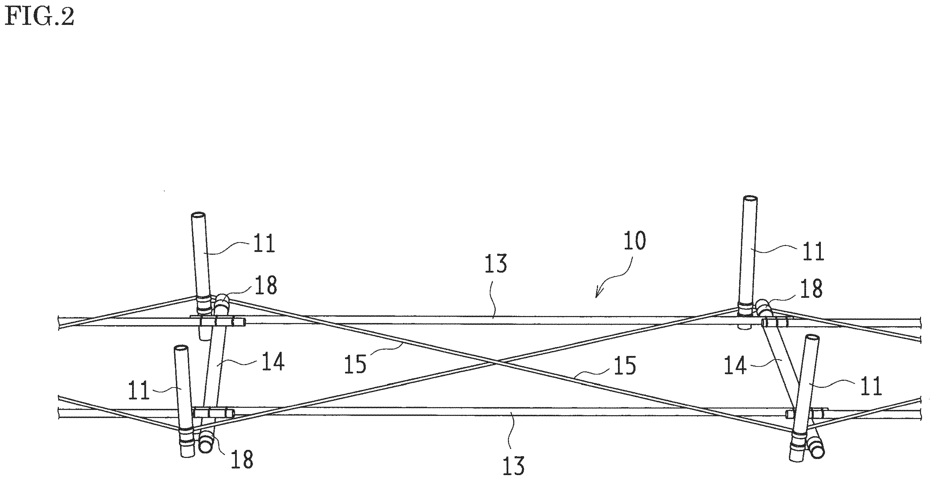

   FIG. 2 is a perspective view showing a part of a culture rack without an upper cover net and a culture bed.
[FIG. 3]

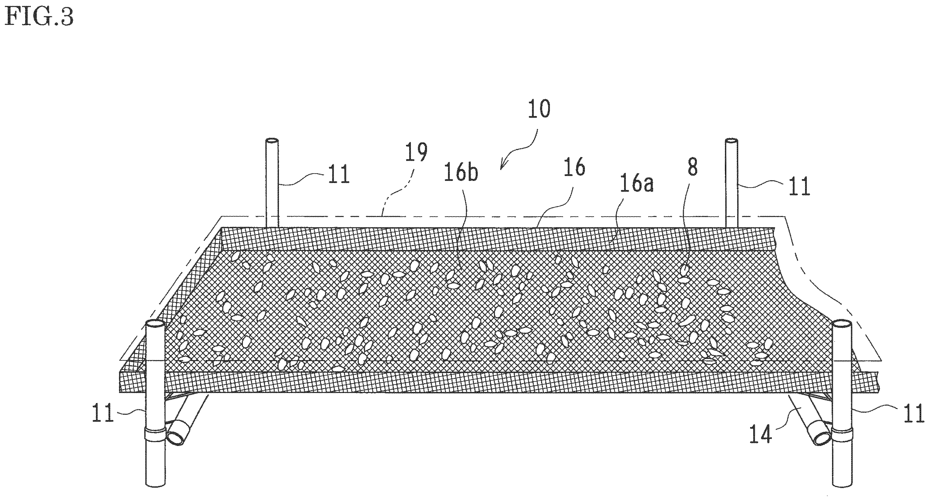

   FIG. 3 is a perspective view showing a part of the culture rack.
[FIG. 4]

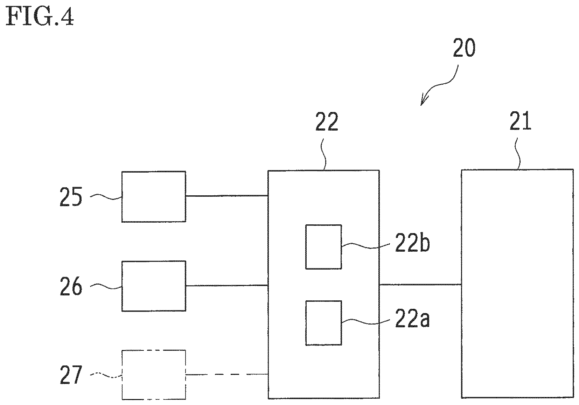

   FIG. 4 is a block diagram showing a sluice gate control device.
[FIGS. 5]

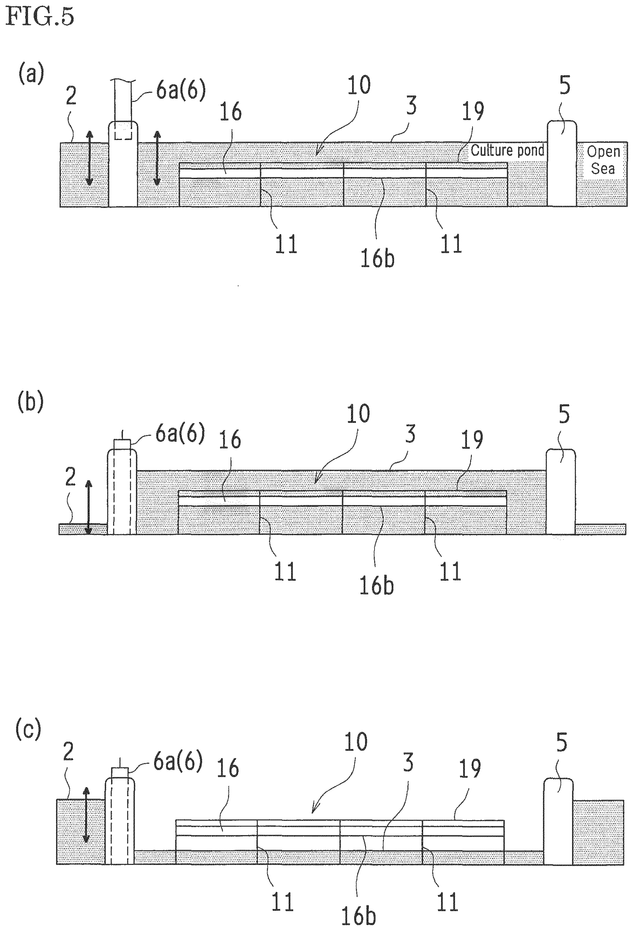

   FIGS. 5 are schematic cross-sectional views showing ebb and flow control by sluice gate equipment. FIG. 5(a) shows a state in which a sluice gate is opened. FIG. 5(b) shows a state after the sluice gate is closed when a tidal level of the open sea is high. FIG. 5(c) shows a state after the sluice gate is closed when a tidal level of the open sea is low.
[FIG. 6]

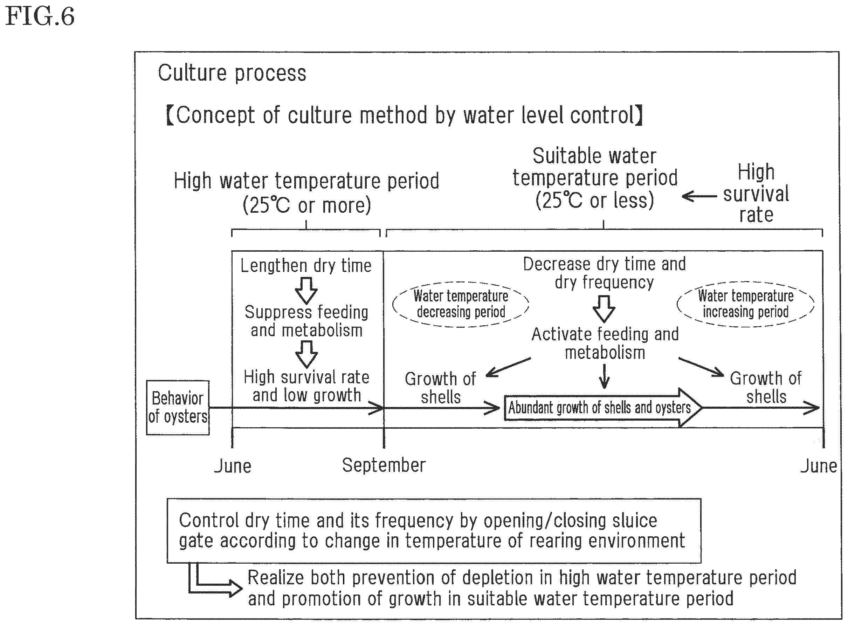

   FIG. 6 is a diagram showing a concept of a method for culturing oysters by water level control.
[FIG. 7]

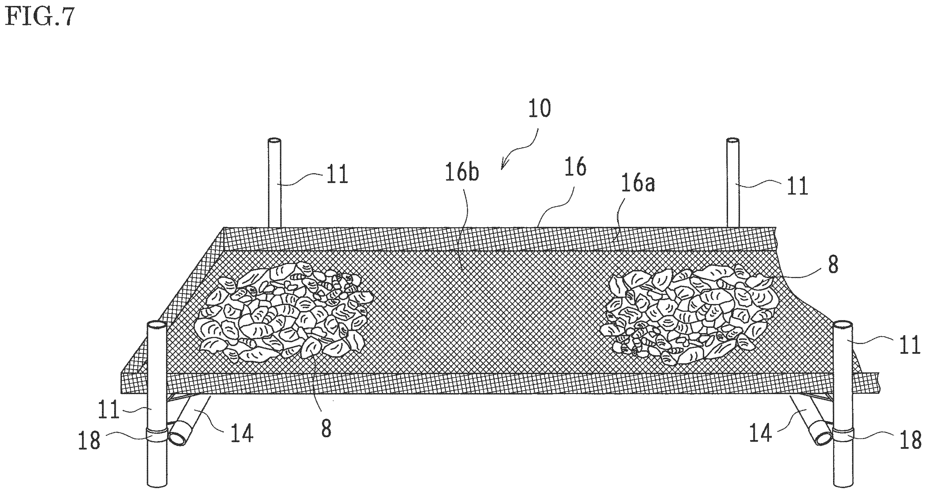

   FIG. 7 is a perspective view showing a state in which oysters at the initial stage of culture are spread on parts of the culture rack.
[FIG. 8]

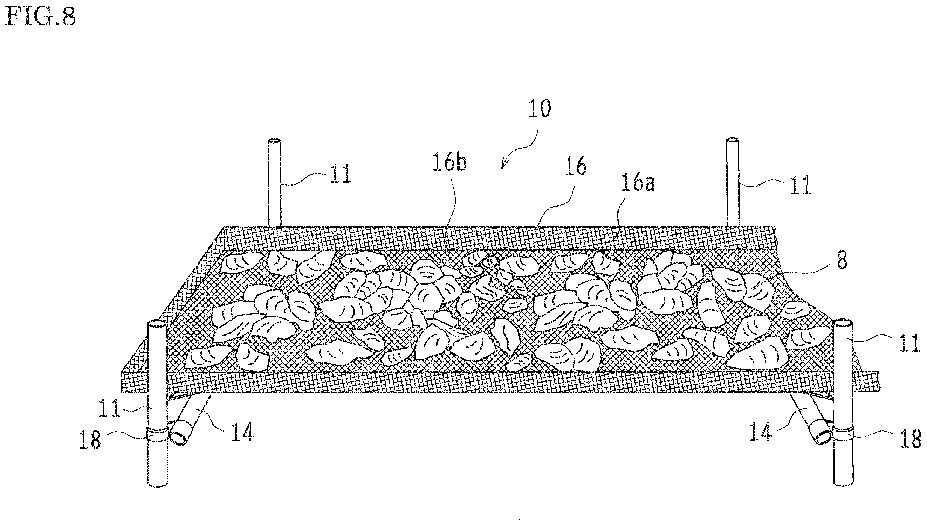

   FIG. 8 is a perspective view showing a state in which oysters are spread on a substantially entire surface of the culture rack.
[FIGS. 9]

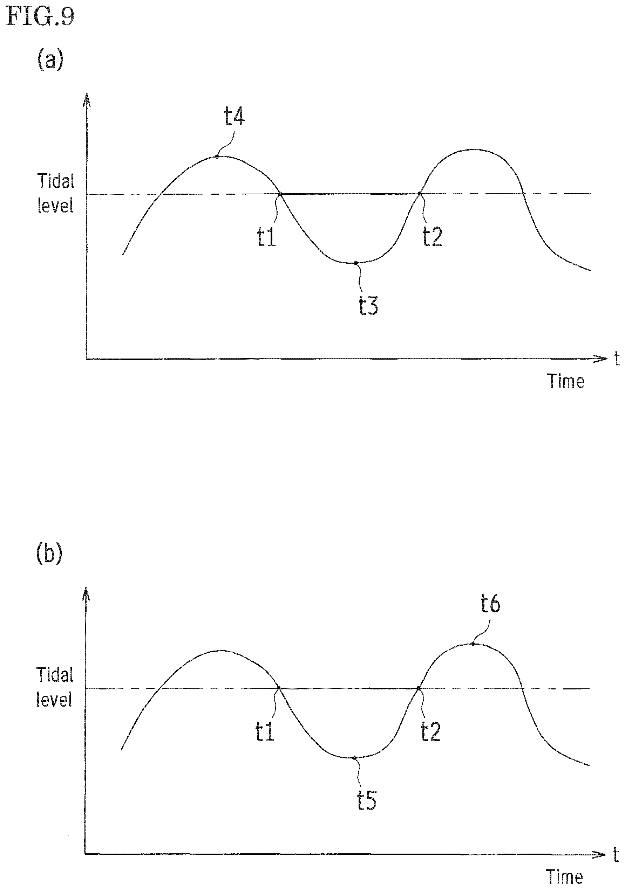

   FIGS. 9 are graphs showing a relationship between a culture time and a tidal level. FIG. 9(a) shows control to shorten a dry time so that the dry time is shorter than a predetermined basic time. FIG. 9(b) shows control to lengthen the dry time so that the dry time is longer than the predetermined basic time.
[FIG. 10]

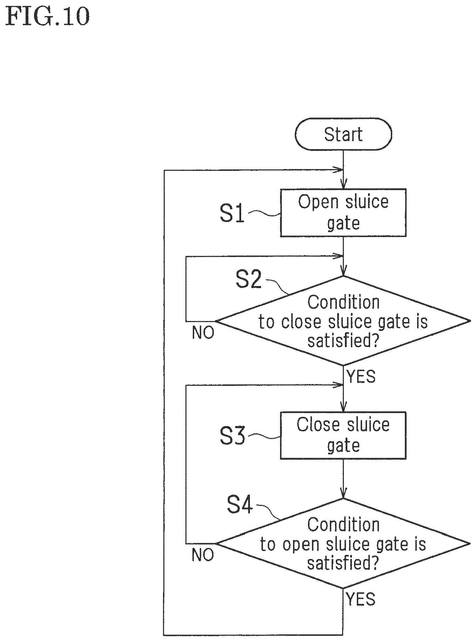

   FIG. 10 is a flowchart showing the control to shorten the dry time so that the dry time is shorter than the predetermined basic time.
[FIG. 11]

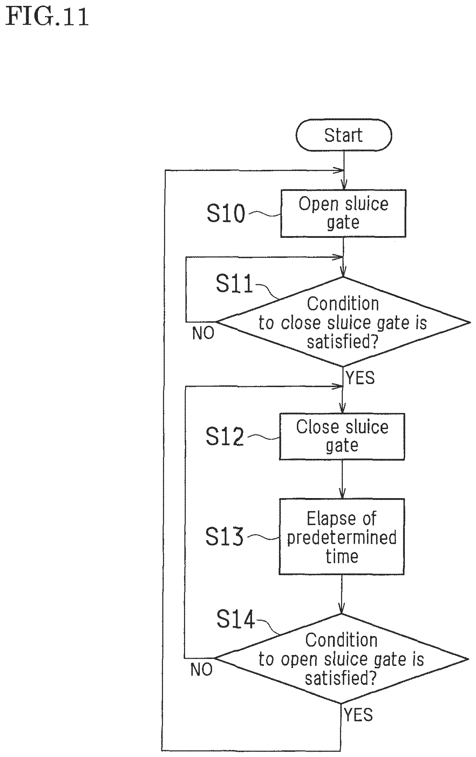

   FIG. 11 is a flowchart showing the control to lengthen the dry time so that the dry time is longer than the predetermined basic time.
[FIG. 12]

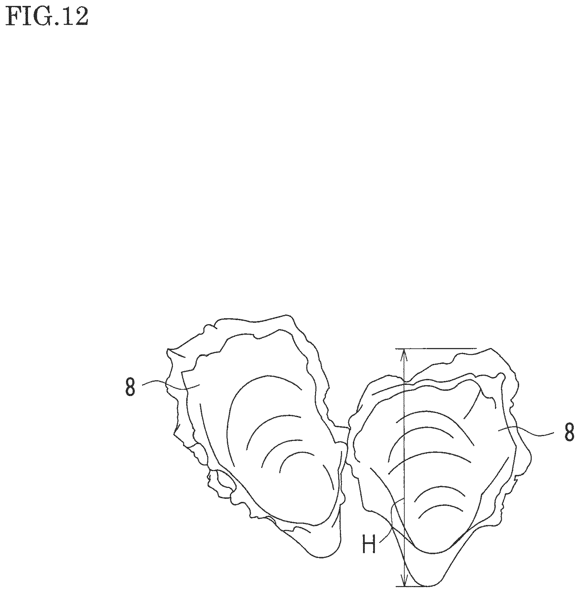

   FIG. 12 is a perspective view showing oysters cultured by the culture system of the present invention.
[FIG. 13]

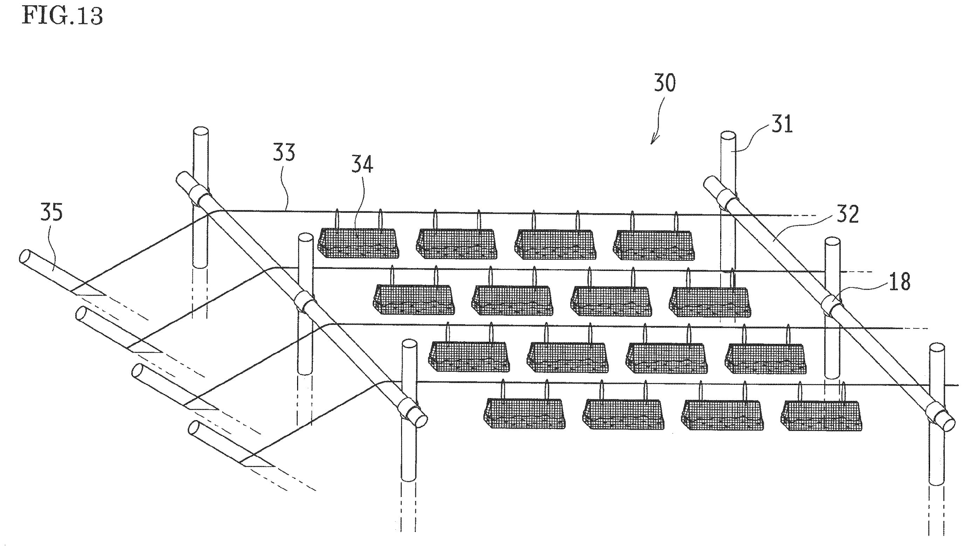

   FIG. 13 is a perspective view showing parts of culture baskets.
[FIGS. 14]

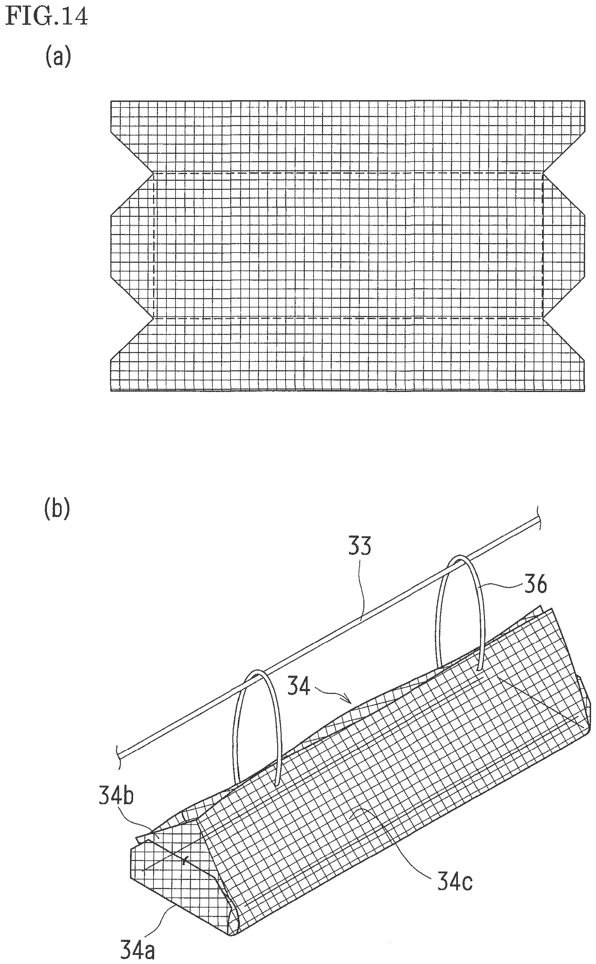

   FIGS. 14 are diagrams showing a shape of a basket member for the culture basket. FIG. 14(a) is a development view thereof. FIG. 14(b) is a perspective view thereof.
[FIGS. 15]
   FIG. 15(a) to FIG. 15(c) are diagrams showing respective culture processes using the culture method of the present invention.

### Modes for Carrying Out Invention

### (Embodiment 1)

Hereinafter, one embodiment of the present invention will be described with reference to the drawings. FIGS. 1 to 12 show a culture system 1 for oysters according to Embodiment 1 of the present invention. FIG. 1 is a plan view schematically showing the culture system 1. FIG. 2 is a perspective view showing a part of a culture rack 10 without an upper cover net 19 and a culture bed 16. FIG. 3 is a perspective view showing a part of the culture rack 10.

As shown in FIG. 1, the culture system 1 according to Embodiment 1 includes: an embankment 5 made of a mound and the like for forming an embankment pond (culturing area) 3 of the sea separated from the open sea 2; sluice gate equipment 6 constituting a part of the embankment 5 so as to communicate an open sea 2 with a culturing area 3 or to shut the culturing area 3 off from the open sea 3; a plurality of culture racks 10 suitably disposed in the culturing area 3 inside the embankment 5; and a sluice gate control device 20 that controls to open and close a sluice gate 6a constituted by a shutter body of the sluice gate equipment 6.

As shown in FIGS. 2 and 3, the culture rack 10 includes: vertical support struts 11 that are erected on the ground (bottom surface); a pair of support members 13 parallel to each other in the horizontal direction; horizontal support struts 14; support ropes 15 and a culture bed 16.

The vertical support struts 11 are erected on the ground at predetermined intervals in the left and right direction (width direction orthogonal to the longitudinal direction) of the culture rack 10. Also, the vertical support struts 11 are erected on the ground at predetermined intervals in the longitudinal direction of the culture bed 16. Between the vertical support struts 11 disposed on both sides of the culture bed 16 along the width direction, the respective horizontal support struts 14 are bridged horizontally via coupling members 18. Also, between the vertical support struts 11 in the longitudinal direction of the culture rack 10, the respective pairs of support ropes 15 are bridged in a manner intersecting with each other. As the culture rack 10 is reinforced by the support members 13 and the support ropes 15, the culture bed 16 can be solidly hold.

The culture bed 16 is laid on the support member 13. The culture bed 16 is formed by a long net plate made of a high-density polyethylene, which has mesh openings of about 2 to 8 mm through which the water passes. A bed surrounding portion 16a of the culture bed 16 is bent upward. Thus, the culture bed 16 is made up of a culture bed surface 16b on which the oysters 8 are spread, and the bed surrounding portion 16a having a height of approximately 10 cm and being upwardly formed around the culture bed surface 16b so as to prevent the oysters 8 from falling involuntarily. In the culture bed 16, it is sufficient that at least the culture bed surface 16b has the water-passing property.

The culture bed 16 is covered by a cover sheet (upper cover net formed by net fabric made of a polyethylene having mesh openings of 2 mm or more and having a high flexibility) 19. The cover sheet 19 is lashed and secured to the culture bed 16 at some edge portions via securing members such as strings (not shown) so as to be removably attached to the culture bed 16. In this way, by covering the oysters 8 with the cover sheet 19, it is possible to obtain, for example, the following effects: preventing dissipation of the oysters 8; preventing bird-damages; shielding lights; and preventing adhering matters.

The height of the culture bed 16 is set to a value so that a dry time in which the culture bed surface 16b (the oysters 8 on the culture bed surface 16b) of the culture bed 16 is exposed from the sea surface equals a predetermined basic time under the condition that the tidal level (water level) of the culturing area 3 follows the change in the tidal level of the open sea 2. Specifically, the height of the culture bed 16 is set so that the dry time per day is 7 hours or more when averaged by month. For example, the culture bed 16 is placed so that the culture bed surface 16b is positioned where the tidal level causes the average value of the daily dry time of 7 hours or more based on a tide table in which are listed predicted tidal levels for each passage of time in various places. Also, each culture rack 10 is separated apart from the seabed of the culturing area 3 by 500 mm or more in the height direction so as to reduce damage due to flying of mud or sand.

Next, the sluice gate control device 20 is described. FIG. 4 is a block diagram showing the sluice gate control device 20. The sluice gate control device 20 includes: a motor 21 as operating means for moving up and down the sluice gate 6a of the sluice gate equipment 6; a sluice gate control unit 22 to control the motor 21; a water surface detector 25 for the culturing area to detect the water surface (tidal level) of the culturing area 3 (e.g. an ultrasonic sensor and a level sensor); and a temperature detector (temperature sensor) 26 to detect a water temperature of the culturing area 3. The sluice gate control unit 22 includes: a memory 22a that stores a time schedule of tidal activity according to the tide table; and a timer 22b.

A description will be given on control of the tidal level of the culturing area 3 by opening and closing the sluice gate equipment 6.

When the tidal level of the open sea 2 is higher than the tidal level of the culturing area 3, opening the sluice gate 6a of the sluice gate equipment 6 allows the sea water of the open sea 2 to flow into the culturing area 3 through the opened sluice gate equipment 6. Also, when the tidal level of the open sea 2 is lower than the tidal level of the culturing area 3, the sea water of the culturing area 3 is allowed to flow out to the open sea 2. Thus, when the sluice gate is opened, the tidal level of the culturing area 3 changes following the tidal activity of the open sea 2 (see FIG. 5(a)).

When the tidal level of the open sea 2 is high (for example, at high tide), closing the sluice gate equipment 6 allows the culturing area 3 to maintain the tidal level higher than the culture bed surface 16b regardless of the change in the tidal activity of the open sea 2 (see FIG. 5(b)). In this way, it is possible to maintain an in-water state of the oysters 8, i.e., the state in which the oysters 8 spread on the culture bed surface 16b are completely submerged in the sea water.

When the tidal level of the open sea 2 is low (for example, at low tide), closing the sluice gate equipment 6 allows the culturing area 3 to maintain the tidal level lower than the culture bed surface 16b regardless of the change in the tidal activity of the open sea 2 (see FIG. 5(c)). In this way, as the tidal level of the culturing area 3 becomes lower than the culture bed 16, it is possible to maintain a dry state of the oysters 8, i.e., the state in which the oysters 8 on the culture bed surface 16b are exposed from the sea water.

The culture system 1 of Embodiment 1 is configured as described above. Here, a method for culturing the oysters 8 using the culture system 1 is described. FIG. 6 is a diagram showing a concept of the method for culturing oysters by water level control. FIG. 7 is a perspective view showing a state in which the oysters 8 at the initial stage of culture are spread on parts of the culture rack 10. FIG. 8 is a perspective view showing a state in which the oysters 8 are spread on a substantially entire surface of the culture rack 10. FIGS. 9(a) and 9(b) are graphs showing a relationship between the culture time and the tidal level.

The oysters 8 are reared previously by other systems, e.g., a known seedling production on the land (seedling production process) and an intermediate rearing (intermediate rearing process by FLUPSY), where spats of the oysters 8 grow to young oysters having the shell height of about 20 mm. Here, FLUPSY (Floating Upweller System) means an intermediate rearing system on the sea for rearing spats (young shellfishes) of bivalves. The system includes a floating raft and rearing containers. With this system, it is possible to rear spats of bivalves with high density by efficiently feeding the spats on natural phytoplankton.

In Embodiment 1, as shown in FIG. 6, the dry state of the oysters 8 is maintained for a longer time in the high water temperature period that lasts generally from June to September. Also, the dry time and its frequency of the oysters 8 are decreased in the suitable water temperature period that lasts generally from September to June.

At the initial stage of culturing the oysters 8, parts of the culture bed 16 of each culture rack 10 are used. That is, at the start of culture, the oysters 8 having the shell height of about 20 mm are spread on parts of the culture bed surface 16b of the culture bed 16 so as to leave a certain space in consideration of the final culture density of 200 to 400 individuals/m². Specifically, as shown in FIG. 7, the oysters 8 are spread on predetermined parts of the culture bed 16 at intervals.

The tidal level of the open sea 2 at an arbitrary time can be estimated based on the tide table as shown in FIG. 9. For example, the memory 22a stores annual data of the time schedule of tidal activity based on the tide table. The water surface detector 25 for the culturing area detects the height of the water surface of the culturing area 3 and transmits a detection signal to the sluice gate control unit 22. The temperature sensor 26 detects the water temperature and transmits a detection signal to the sluice gate control unit 22.

Generally, in the period from June to September, the sea water temperature increases accompanied by the increase of the ambient temperature. As the result, the water temperature is likely to reach a predetermined temperature (e.g. 25°C) or more. When the temperature sensor 26 detects that the water temperature equals the predetermined temperature or more, the sluice gate control device 20 opens the sluice gate equipment 6 so as to leave the tidal level changing. That is, when the sluice gate equipment 6 is being opened, the tidal level in the culturing area 3 changes accompanied by the tidal activity of the open sea 2. In the case where the tidal level of the open sea 2 is higher than the tidal level in the culturing area 3, the sea water of the open sea 2 flows into the culturing area 3 through the sluice gate equipment 6. Thus the tidal level in the culturing area 3 becomes higher than the culture bed surface 16b of the culture bed 16, and the oysters 8 are submerged in the sea ("in-water state").

On the other hand, in the case where the tidal level of the open sea 2 is lower at low tide, the sea water in the culturing area flows out to the open sea 2 through the sluice gate equipment 6. Thus the tidal level in the culturing area 3 becomes lower, and the oysters 8 on the culture bed surface 16b are exposed ("dry state"). Subsequently, when the tide is full, the sea water of the open sea 2 flows again into the culturing area 3 to increase the tidal level in the culturing area 3. Thus, the in-water state and the dry state alternate repeatedly.

In Embodiment 1, the height of the culture bed surface 16b of the culture rack 10 is set so that the culture bed surface 16b has an average dry time of 7 hours or more. Thus, it is possible to expose the oysters 8 for 7 hours or more on average. Consequently, the shell surfaces of the oysters 8 can be dried by placing the oysters 8 in the dry state for the predetermined period of time every day.

Next, a description will be given on control to shorten the dry time so that the dry time is shorter than the predetermined basic time, with reference to FIGS. 9(a) and 10. This control is performed when the sea water temperature becomes the predetermined temperature or less, for example, when the sea water temperature is relatively low in the period from September to June of the following year.

As shown in FIG. 9(a), a first time t1 and a second time t2 are estimated based on the time schedule of tidal activity. At the first time t1, the tidal level of the open sea 2 becomes lower than the culture bed surface 16b, and at the second time t2, the tidal level of the open sea 2 becomes higher than the culture bed surface 16b. Also, an opening time t3, which is before the second time t2 and after the first time t1, is set. The time period between the first time t1 and the second time t2 corresponds to the predetermined basic time.

As shown in FIG. 10, in the state in which the sluice gate of the sluice gate equipment 6 is opened (S1), when the tidal level of the open sea 2 is higher than the tidal level at the culture bed surface 16b of the culture rack 10, it is determined that a condition to close the sluice gate is satisfied (S2). Thus, the sluice gate 6a of the sluice gate equipment 6 is closed (S3). In this state, it is possible to maintain a high tidal level in the culturing area 3 (i.e., the in-water state), thus the oysters 8 on the culture rack 10 can be reared. Although the tidal level of the open sea 2 gradually lowers as time elapses, the tidal level in the culturing area 3 can be maintained at a predetermined height regardless of the change in the tidal level of the open sea 2, because the sluice gate of the sluice gate equipment 6 is being closed.

In this way, the timing at which the sluice gate equipment 6 is closed is set to a closing time t4 before the first time t1 (e.g. at high tide). Then, when the opening time t3 comes, it is determined that a condition to open the sluice gate is satisfied (S4). Thus, the sluice gate equipment 6 is opened. At the opening time t3, the tidal level of the open sea 2 is lower than the tidal level at the culture bed surface 16b. Accordingly, the sea water in the culturing area 3 flows out to the open sea 2. Thus, the in-water state can be maintained for a period from the first time t1 to the opening time t3, that is, the dry time can be shortened compared with the predetermined basic time by the period from the first time t1 to the opening time t3. Furthermore, since the sluice gate equipment 6 is being opened, when the tide is full, the tidal level in the culturing area 3 increases accompanied by the increase of the tidal level of the open sea 2. Thus, the oysters 8 are again maintained under the sea.

The sluice gate control unit 22 controls the sluice gate equipment 6 based on the time schedule of tidal activity. However, the sluice gate control unit 22 can also control the sluice gate equipment 6 based on the detection signal from the water surface detector 25 for culturing area. The detection by the water surface detector 25 for culturing area is secondarily adopted to confirm the height of the water surface in the culturing area.

Next, a description will be given on control to lengthen the dry time so that the dry time is longer than the predetermined basic time, with reference to FIGS. 9(b) and 11. In order to lengthen the dry time compared with the predetermined basic time, the sluice gate equipment 6 is closed for a predetermined time when the tidal level of the open sea 2 is low. As shown in FIGS. 9(b) and 11, in the state in which the sluice gate equipment 6 is opened (S10), when it is detected that the tidal level of the open sea 2 is lower than the culture bed surface 16b (e.g. at low tide) at a time t5 before a working time zone, it is determined that a condition to close the sluice gate is satisfied (S11). Thus, the sluice gate equipment 6 is closed (S12). In this way, by closing the sluice gate equipment 6 when the tidal level is low, the sea water of the open sea 2 is prevented from flowing into the culturing area 3, which results in ensuring the dry state for a desired period of time to exposure the oysters. Preferably, the duration of the dry time is controlled between 7 hours to 15 hours.

Furthermore, after a predetermined time has elapsed (S13), the sluice gate equipment 6 is opened. For example, the sluice gate is opened at a time t6. The time t6 is, for example, after the time t2 and at which the tidal level of the open sea 2 is higher than the height of the culture bed 16 (e.g. at high tide). Thus, the tidal level changes accompanied by the tidal activity of the open sea 2, which allows the sea water to flow into the culturing area 3 in a suitable manner from the open sea 2.

Thus, the dry time can be set between the first time t1 and the high tide time t6. Since the oysters 8 grow by the above-described culture method, the oysters 8 are spread, according to the growth thereof, on an empty space of the culture bed 16 using the dry time. Thus, as to the culture density of the oysters 8, the surface area for culturing the oysters 8 is changed according to the growth of the oysters 8 so as to maintain the predetermined population density of the oysters.

As described above, it is desirable for the oysters 8 to be reared with a predetermined culture density. That is, at the start of culture, the young oysters 8 are spread on parts of the culture bed so as to leave a certain space in consideration of the final culture density of 200 to 400 individuals/m². Thus, by spreading the oysters 8 on the empty space according to the growth thereof, it is possible to easily control the density, on site, according to the growth stage of the oysters 8. In this way, with Embodiment 1, it is possible to reduce the complexity of the density control according to the growth stage of the oysters 8.

Also, with Embodiment 1, the culture period can be shortened. That is, in Embodiment 1, due to opening/closing of the sluice gate equipment 6 according to the change in the tidal level of the open sea 2, it is possible to maintain a fixed tidal level inside the embankment pond. As the result, it is possible to considerably prevent the working times and working environment from being affected by the tidal activity of the open sea. Also, by closing the sluice gate equipment 6 when the tidal level of the open sea 2 is high, it is possible to constantly place the culture system 1 under the sea, which results in promotion of the growth of the shells. Furthermore, since the mortality risk of the oysters is reduced in the period when the water temperature is the predetermined temperature (25°C) or less, the total culture period can be shortened, by the above treatments, to about 8 to 18 months.

The start timing for culturing the oysters 8 (organisms to be cultured) using the culture system 1 is not particularly limited, which may be suitably set according to the kinds of oysters 8.

With Embodiment 1, it is possible to improve selectivity of the working times. As the culture system 1 can maintain the dry state by closing the sluice gate equipment 6 when the tidal level of the open sea 2 is low, it is possible to ensure not only the sufficient working times but also the working environment in the daytime easily even when the low tide occurs at night. In Japan, since the days having the low tide at night considerably increase generally from late autumn to early spring, this embodiment is very effective means for improving work efficiency.

With Embodiment 1, it is possible to suppress depletion of the oysters in the high water temperature period. In the period when the water temperature is 25°C or more, the average dry time per day is set to 7 hours or more by opening/closing the sluice gate equipment 6 so as to restrict the feeding activity of the oysters 8, which results in preventing the oysters from weakening caused by excessively accelerated metabolism, and in maintaining the natural physiological state of the oysters. Thus, the depletion of the oysters can be reduced in the high water temperature period. In the period when the ambient temperature at the time of drying is more than 30°C, the culture bed 16 is covered by the cover sheet 19 having mesh openings of about 2 mm so as to improve the light-shielding effect. Thus, the surface of the shells can be prevented from having an excessive high temperature.

In addition, since the dry state of the oysters 8 can be controlled, it is possible to sufficiently dry the exposed oysters 8 using the dry state. Thus, as shown in FIG. 12, it is possible to prevent competitors over food from adhering to the oysters 8. As the result, it is possible to culture the oysters 8, as shown in FIG. 12, with good shaped shells having a predetermined height (size H of the oyster 8 in the longitudinal direction), to which few competitors over food are adhered. Accordingly, it is possible to improve especially the commercial value of the oysters with shells.

### (Embodiment 2)

Hereinafter, another embodiment of the present invention will be described with reference to the drawings. The culture system according to Embodiment 2 is characterized in that culture baskets are used in place of the culture racks 10 in the culture system 1 described in Embodiment 1. FIG. 13 is a perspective view showing parts of culture baskets 30 according to Embodiment 2. FIG. 14 is a perspective view showing a shape of a basket member 34 for the culture basket 30. In Embodiment 2, the component elements (such as the embankment 5 and the sluice gate equipment 6) except for the culture baskets 30 and the culture method (i.e., the control to open and close the sluice gate equipment 6 and the like) are the same as those in Embodiment 1. Thus, the description thereof is omitted here. Only the specific configuration of the culture basket 30 is described hereafter.

As shown in FIG. 13, the culture basket 30 includes: vertical support struts 31 that are erected on the ground (bottom surface); horizontal support struts 32; basket member hanging wires 33; and the basket members 34.

A plurality of vertical support struts 31 (here, three struts) is erected on the ground at predetermined intervals in the left and right direction (width direction orthogonal to the longitudinal direction) of the culture baskets 30. Also, the vertical support struts 31 are erected on the ground at predetermined intervals in the longitudinal direction of the culture baskets 30. Between the vertical support struts 11 erected in the width direction of the culture baskets 30, the respective horizontal support struts 32 are bridged horizontally via coupling members 18. Also, between the horizontal support struts 32 in the longitudinal direction of the culture baskets 30, a plurality of basket member hanging wires 33 (here, four wires) is bridged so as to be parallel to one another. Edge portions of the basket member hanging wires 33 are secured to respective anchor posts 35.

The basket member 34 is to culture the oysters 8 encaged therein, and is disposed with being hung by the basket member hanging wire 33. In Embodiment 2, four basket members 34 are hung by one basket member hanging wire 33 bridged between the two horizontal support struts 32 arranged next to each other in the longitudinal direction of the culture baskets 30.

The basket member 34 is formed by a net plate made of a high-density polyethylene, which has mesh openings of about 2 to 15 mm through which the water passes. The basket member 34 has a tube-like shape whose cross-section is substantially triangular. For example, the net plate, which has a shape shown in FIG. 14(a) by cutting, is bent and closed with a string or a binding band to form the basket member 34 as shown in FIG. 14(b). The oysters 8 may be put in or taken out from the basket member 34, through an opening made by untying at least a part of the above string or binding band.

The configuration of the basket member 34 is not limited to the above example. As another example, the basket member 34 may be formed by attaching the net plate onto a frame member so as to have a tube-like shape whose cross-section is substantially triangular. In this case, the basket member 34 using the frame member may have at least one openable side surface through which the oysters 8 may be put in or taken out.

Also, the basket member 34 is hung by the basket member hanging wire 33 using a rope 36, accordingly, the basket member 34 can easily be removed from the basket member hanging wire 33. When the oysters 8 are put in or taken out from the basket member 34 or when the basket member 34 is cleaned, such operations can be easily performed in a state in which the basket member 34 is being removed from the basket member hanging wire 33.

The basket member 34 hung by the basket member hanging wire 33 is disposed so that one surface of the three surfaces constituting the triangular-shape in cross section serves as a horizontal bottom surface. This bottom surface is a culture bed surface 34a on which the oysters 8 are spread. The other two surfaces 34b and 34c have a similar function to the cover sheet 19 of Embodiment 1. That is, the surfaces 34b and 34c of the basket member 34 cover the oysters 8 spread on the culture bed surface 34a so as to obtain, for example, the following effects: preventing dissipation of the oysters 8; preventing bird-damages; shielding lights; and preventing adhering matters.

The height of basket member 34 of the culture basket 30 is set to a value so that a dry time in which the culture bed surface 34a (the oysters 8 on the culture bed surface 34a) of the basket member 34 is exposed from the sea surface equals a predetermined basic time under the condition that the tidal level (water level) of the culturing area 3 follows the change in the tidal level of the open sea 2. Specifically, the height of the culture basket 30 is set so that the dry time per day is 7 hours or more when averaged by month. For example, the culture basket 30 is placed so that the culture bed surface 34a is positioned where the tidal level causes the average value of the daily dry time of 7 hours or more based on a tide table in which are listed predicted tidal levels for each passage of time in various places. Also, the culture basket 30 is separated apart from the seabed of the culturing area 3 by 500 mm or more in the height direction so as to reduce damage due to flying of mud or sand.

As to the number of individuals of the oysters 8 to be spread in one culture basket 30 at the initial stage of culturing, the above number is set in consideration of the final culture density of 200 to 400 individuals/m² in the culture bed surface 34a.

The present invention is not limited to Embodiments 1 and 2 as described above. The oysters 8 include a plurality of species such as Crassostrea gigas, Crassostrea sikamea, Crassostrea ariakesis, Ostrea denselamellosa and Ostrea edulis. Other shellfishes such as Ruditapes philippinarum, Meretrix lusoria and Mactra chinensis may also be used.

Also, as shown in FIGS. 1 and 4 by virtual lines, an external tidal level detector 27 may be provided to detect the tidal level of the open sea 2. In this case, the tidal level of the open sea 2 can be constantly detected apart from the time schedule of tidal activity. Furthermore, the tidal level of the open sea 2 may be obtained based on both the time schedule of tidal activity and the external tidal level detector 27.

In a non-claimed embodiment, the opening/closing operations of the sluice gate equipment may be performed manually by a worker. Embodiments 1 and 2 exemplarily describe the culture system 1 having the sluice gate equipment to control ebb and flow of the tide. However, a water tank may be applied to the present invention for culturing the oysters 8 and the like. For example, the sea water is stored in the water tank via a pump that is controlled to increase/decrease the sea water level in the water tank.

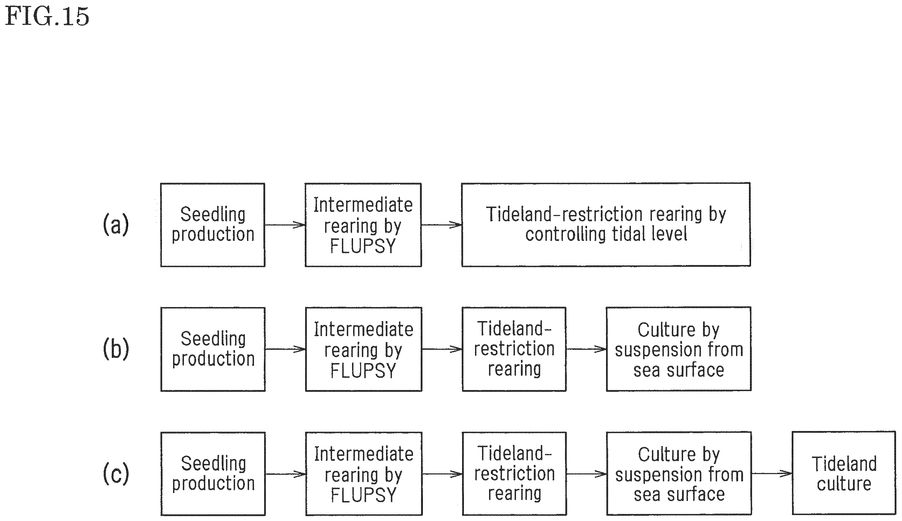

In the culture method according to Embodiment 1 or 2, there is a tideland-restriction rearing process by controlling the tidal level (see FIG. 15(a)), after the seedling production process and the intermediate rearing process by FLUPSY, as described above. Like this, the most suitable water level for survival and growth of the oysters 8 is provided according to the change in the water temperature. Thus, it is possible to shorten the culture period and to reduce depletion of the oysters in the high water temperature period.

In the conventional culture, which adopts the suspension culture process after the seedling production process and the intermediate rearing process by FLUPSY, there often occurs a problem of stunted growth of the oysters 8 in the suspension culture process. In order to address this problem, the conventional suspension culture process can be performed after performing the seedling production process, the intermediate rearing process by FLUPSY and the tideland-restriction rearing process by the culture system 1 of the embodiments of the present invention (see FIG. 15(b)). In this way, it is possible to shorten the total culture period, and in addition, to remedy the problem of stunted growth of the oysters 8 often caused by the conventional method including the seedling production process, the intermediate rearing process by FLUPSY and the suspension culture process.

Furthermore, it is possible to perform a rearing process in the tideland as the final process in addition to the culture processes indicated in FIG. 15(b) (see FIG. 15(c)). The rearing process in the tideland as the final process may be performed in an artificial tideland where the tidal level is artificially adjusted, or in a natural tideland by the natural tidal level. In this case where the tideland culture is added as the final process, the oysters can further abundantly grow because they are reared at the tidal level with which they originally live. Also, such oysters can have resistance to the dry state or transport stress when they are shipped as the oysters with shells.

The present invention may be embodied in other forms without departing from the scope of the appended claims. The foregoing embodiment is therefore to be considered in all respects as illustrative and not limiting. The scope of the invention is indicated by the appended claims rather than by the foregoing description.

### Description of Reference Numerals

- 1: Culture system
- 2: Open sea
- 3: Culturing area
- 5: Embankment

- 15: Support rope
- 16: Culture bed
- 16a: Bed surrounding portion
- 16b: Culture bed surface
- 18: Coupling member
- 19: Cover sheet (Upper cover net)
- 20: Sluice gate control device
- 21: Motor
- 22: Sluice gate control unit
- 25: Water surface detector for culturing area
- 26: Temperature sensor (Temperature detector)
- 27: External tidal level detector
- 30: Culture basket
- 31: Vertical support strut
- 32: Horizontal support strut
- 33: Basket member hanging wire
- 34: Basket member
- 34a: Culture bed surface

## Claims

1. A method for culturing organisms to be cultured (8), comprising the steps of:
disposing a culture bed surface (16b,34a) in a culturing area (3) of which a water level is adjustable so that the culture bed surface (16b,34a) has a predetermined height from a bottom surface of the culturing area (3);
placing the organisms to be cultured (8) such as shellfishes on the culture bed surface (16b,34a);
separating the culturing area (3) apart from the open sea by an embankment (5);
controlling a height of the water surface of the culturing area (3) using a natural tidal activity by opening/closing a sluice gate equipment (6) constituting a part of the embankment (5); and
adjusting the water level of the culturing area (3) so that the water level is controlled to realize: a dry state in which the organisms to be cultured (8) on the culture bed surface (16b,34a) are exposed from a water surface; and an in-water state in which the organisms to be cultured (8) are submerged in the water.

2. The method for culturing organisms to be cultured according to claim 1,
wherein the sluice gate equipment (6) is configured to move a sluice gate (6a) up and down so that the sluice gate (6a) is opened/closed.

3. The method for culturing organisms to be cultured (8) according to claim 1 or 2 wherein the culture bed surface (16b,34a) is disposed at a height between a tidal level at high tide of the open sea and a tidal level at low tide of the open sea.

4. The method for culturing organisms to be cultured (8) according to claim 3, wherein, when a water temperature around a culture rack (10) is a predetermined temperature or more, the water level is controlled to lengthen a dry time compared with the dry time when the water temperature is lower than the predetermined temperature.

5. The method for culturing organisms to be cultured (8) according to any one of claims 1 to 4,
wherein the culture bed surface (16b,34a) is a net through which water passes, and
wherein the culture bed surface (16b,34a) is separated apart from the bottom surface of the culturing area (3) by 500 mm or more in a height direction.

6. The method for culturing organisms to be cultured (8) according to any one of claims 1 to 5, wherein the organisms to be cultured (8) are oysters.

7. The method for culturing organisms to be cultured (8) according to claim 6, wherein a culture density of the organisms to be cultured (8) on the culture bed surface (16b,34a) is controlled by changing a surface area for culture according to growth of the organisms to be cultured (8) so as to maintain a predetermined population density of the organisms to be cultured (8).

8. The method for culturing organisms to be cultured (8) according to any one of claims 1 to 7, wherein the culture bed surface (16b,34a) is a floor surface of a culture rack (10) formed in a rack-like shape by a long net plate.

9. The method for culturing organisms to be cultured (8) according to any one of claims 1 to 7, wherein the culture bed surface (16b,34a) is a bottom surface of a culture basket (30) formed in a tube-like shape by a net plate.

10. A culture system (1) for performing the method for culturing organisms to be cultured (8) according to claim 1, comprising:
an embankment (5) for forming a culturing area (3) of the sea separated from the open sea (2); a sluice gate equipment (6) constituting a part of the embankment (5), the sluice gate equipment (6) capable of communicating the culturing area (3) with the open sea and shutting the culturing area (3) off from the open sea; and a driver for driving the sluice gate equipment (6);
**characterized in that** the culture system further comprises a sluice gate control unit (22) for controlling the driver, including a memory (22a) that stores a time schedule of tidal activity according to a tide table, and a timer (22b),
wherein the sluice gate control unit (22) is configured to move a sluice gate (6a) of the sluice gate equipment (6) up and down so that the sluice gate (6a) is opened/ closed based on the time schedule of the tidal activity.

11. The culture system (3) for organisms to be cultured (8) according to claim 10, further comprising a temperature detector (26) for detecting a water temperature of the culturing area (3),
wherein the sluice gate control unit (22) is configured to control, based on a detection signal from the temperature detector (26), the opening and closing of the sluice gate equipment (6) so as to lengthen or shorten a time for the dry state compared with a predetermined basic time.

## Patentansprüche

1. Ein Verfahren zur Kultivierung von zu kultivierenden Organismen (8), umfassend die Schritte:
Anordnen einer Kulturbettoberfläche (16b,34a) in einer kultivierenden Fläche (3), deren Wasserniveau einstellbar ist, so dass die Kulturbettoberfläche (16b,34a) eine vorbestimmte Höhe von einer Grundoberfläche der kultivierenden Fläche (3) aufweist;
Platzieren der zu kultivierenden Organismen (8) wie z.B. Schalentiere auf der Kulturbettoberfläche (16b,34a);
Trennen der kultivierenden Fläche (3) abgesondert von der offenen See durch einen Damm (5);
Kontrollieren einer Höhe der Wasseroberfläche der kultivierenden Fläche (3) unter Verwendung einer natürlichen Gezeitenaktivität durch Öffnen / Schließen einer Stautor - Ausrüstung (6), welche einen Teil des Dammes (5) bildet; und
Einstellen des Wasserniveaus der kultivierenden Fläche (3), so dass das Wasserniveau eingestellt ist, um zu bewerkstelligen: einen trockenen Zustand, in welchem die zu kultivierenden Organismen (8) an der Kulturbettoberfläche (16b,34a) im Vergleich zu einer Wasseroberfläche freiliegend sind; und einen Im-Wasser - Zustand, in welchem die zu kultivierenden Organismen (8) in das Wasser eingetaucht sind.

2. Das Verfahren zur Kultivierung von zu kultivierenden Organismen nach Anspruch 1,
worin die Stautor - Ausrüstung (6) konfiguriert ist, um ein Stautor (6a) hoch und runter zu bewegen, so dass das Stautor (6a) geöffnet / geschlossen wird.

3. Das Verfahren zur Kultivierung von zu kultivierenden Organismen (8) nach Anspruch 1 oder 2, worin die Kulturbettoberfläche (16b,34a) in einer Höhe zwischen einem Gezeitenniveau bei einer hohen Gezeit der offenen See und einem Gezeitenniveau bei einer niedrigen Gezeit der offenen See angeordnet ist.

4. Das Verfahren zur Kultivierung von zu kultivierenden Organismen (8) nach Anspruch 3, worin, wenn eine Wassertemperatur um ein Kultivierungsgestell (10) eine vorbestimmte Temperatur oder höher ist, das Wasserniveau geregelt wird, um eine Trockenzeit zu verlängern, verglichen mit der Trockenzeit, wenn die Wassertemperatur niedriger ist als die vorbestimmte Temperatur.

5. Das Verfahren zur Kultivierung von zu kultivierenden Organismen (8) nach irgendeinem der Ansprüche 1 bis 4,
worin die Kulturbettoberfläche (16b,34a) ein Netz ist, durch welches Wasser gelangt, und
worin die Kulturbettoberfläche (16b,34a) von der Bodenoberfläche der kultivierenden Fläche (3) 500 mm oder mehr in einer Höhenrichtung getrennt ist.

6. Das Verfahren zur Kultivierung von zu kultivierenden Organismen (8) nach irgendeinem der Ansprüche 1 bis 5, worin die zu kultivierenden Organismen (8) Austern sind.

7. Das Verfahren zur Kultivierung von zu kultivierenden Organismen (8) nach Anspruch 6, worin eine Kulturdichte der zur kultivierenden Organismen (8) an der Kulturbettoberfläche (16b,34a) kontrolliert wird, indem eine oberflächliche Fläche für die Kultivierung gemäß dem Wachstum der zu kultivierenden Organismen (8) geändert wird, um so eine vorbestimmte Besiedlungsdichte der zu kultivierenden Organismen (8) beizubehalten.

8. Das Verfahren zur Kultivierung von zu kultivierenden Organismen (8) nach irgendeinem der Ansprüche 1 bis 7, worin die Kulturbettoberfläche (16b,34a) eine Bodenoberfläche eines Kultivierungsgestells (10) ist, welche durch eine lange Netzplatte in eine Gestell-artige Gestalt ausgebildet ist.

9. Das Verfahren zur Kultivierung von zu kultivierenden Organismen (8) nach irgendeinem der Ansprüche 1 bis 7, worin die Kulturbettoberfläche (16b,34a) eine Bodenoberfläche eines Kultivierungskorbes (30) ist, welcher durch eine Netzplatte in eine röhrenförmige Gestalt ausgebildet ist.

10. Ein Kultivierungssystem (1) für die Durchführung des Verfahrens zur Kultivierung von zu kultivierenden Organismen (8) nach Anspruch 1, umfassend:
einen Damm (5) zur Bildung einer kultivierenden Fläche (3) der See, getrennt von der offenen See (2); eine Stautor - Ausrüstung (6), die einen Teil des Dammes (5) bildet, wobei die Stautor - Ausrüstung (6) in der Lage ist, eine kommunizierende Verbindung zwischen der kultivierenden Fläche (3) und der offenen See herzustellen und die kultivierende Fläche (3) von der offenen See abzutrennen; und
einen Treiber für den Antrieb der Stautor - Ausrüstung (6); dadurch charakterisiert, dass das Kultivierungssystem weiterhin umfasst
eine Stautor - Regelungseinrichtung (22) für die Regelung des Treibers, einschließlich eines Speichers (22a), welcher einen Zeitplan der Gezeitenaktivität gemäß einer Gezeitentabelle speichert, und eine Schaltuhr (22b),
worin die Stautor - Regelungseinrichtung (22) konfiguriert ist, um ein Stautor (6a) der Stautor - Ausrüstung (6) hoch und runter zu bewegen, so dass das Stautor (6a) basierend auf dem Zeitplan der Gezeitenaktivität geöffnet / geschlossen wird.

11. Das Kultivierungssystem (3) für zu kultivierende Organismen (8) nach Anspruch 10, weiterhin umfassend einen Temperaturdetektor (26) für die Detektion einer Wassertemperatur der kultivierenden Fläche (3),
worin die Stautor - Regelungseinrichtung (22) konfiguriert ist, um, basierend auf einem Detektionsignal des Temperaturdetektors (26), das Öffnen und Schließen der Stautor - Ausrüstung (6) zu regeln, um eine Zeit für den trockenen Zustand verglichen mit einer vorbestimmten Basiszeit zu verlängern oder zu verkürzen.

## Revendications

1. Méthode de culture d'organismes à cultiver (8) comprenant les étapes :
de disposition d'une surface d'un lit de culture (16b, 34a) dans une zone de culture (3) dont le niveau d'eau peut être ajusté de sorte que la surface du lit de culture (16b, 34a) possède une hauteur prédéterminée par rapport à une surface de fond de la zone de culture (3) ;
de mise en place des organismes à cultiver (8), tels que des coquillages, sur la surface du lit de culture (16b, 34a) ;
de séparation de la zone de culture (3) de la pleine mer par une digue (5) ;
de contrôle d'une hauteur de la surface de l'eau de la zone de culture (3) en utilisant l'activité naturelle de la marée par une ouverture/une fermeture d'un équipement de porte d'écluse (6) constituant une partie de la digue (5) ; et
d'ajustement du niveau d'eau de la zone de culture (3) de sorte que le niveau d'eau est contrôlé pour réaliser : un état sec dans lequel les organismes à cultiver (8) sur la surface du lit de culture (16b, 34a) sont exposés hors de la surface de l'eau ; et un état immergé dans l'eau dans lequel les organismes à cultiver (8) sont submergés par l'eau.

2. Méthode de culture d'organismes à cultiver selon la revendication 1,
dans laquelle l'équipement de porte d'écluse (6) est configuré pour déplacer une porte d'écluse (6a) vers le haut et vers le bas de sorte que la porte d'écluse (6a) est ouverte/fermée.

3. Méthode de culture d'organismes à cultiver (8) selon la revendication 1 ou 2, dans laquelle la surface du lit de culture (16b, 34a) est disposée à une hauteur entre un niveau de marée de marée haute de la pleine mer et un niveau de marée de marée basse de la pleine mer.

4. Méthode de culture d'organismes à cultiver (8) selon la revendication 3, dans laquelle, lorsqu'une température de l'eau autour d'un casier de culture (10) est une température prédéterminée ou supérieure, le niveau de l'eau est contrôlé pour rallonger une durée sèche comparativement à une durée sèche lorsque la température de l'eau est inférieure à la température prédéterminée.

5. Méthode de culture d'organismes à cultiver (8) selon l'une quelconque des revendications 1 à 4,
dans laquelle la surface du lit de culture (16b, 34a) est un filet à travers lequel passe l'eau, et
dans laquelle la surface du lit de culture (16b, 34a) est séparée de la surface de fond de la zone de culture (3) par 500 mm ou plus dans la direction de la hauteur.

6. Méthode de culture d'organismes à cultiver (8) selon l'une quelconque des revendications 1 à 5, dans laquelle les organismes à cultiver (8) sont des huitres.

7. Méthode de culture d'organismes à cultiver (8) selon la revendication 6, dans laquelle une densité de culture des organismes à cultiver (8) sur la surface du lit de culture (16b, 34a) est contrôlée en changeant une zone de surface pour la culture en fonction de la croissance des organismes à cultiver (8) de sorte à maintenir une densité de population prédéterminée des organismes à cultiver (8).

8. Méthode de culture d'organismes à cultiver (8) selon l'une quelconque des revendications 1 à 7, dans laquelle la surface du lit de culture (16b, 34a) est une surface de fond d'un casier de culture (10) conçu dans une forme semblable à un casier par un long plateau en forme de filet.

9. Méthode de culture d'organismes à cultiver (8) selon l'une quelconque des revendications 1 à 7, dans laquelle la surface du lit de culture (16b, 34a) est une surface de fond d'un panier de culture (30) conçu dans une forme semblable à un tube par un plateau en forme de filet.

10. Système de culture (1) pour exécuter la méthode de culture d'organismes à cultiver (8) selon la revendication 1, comprenant :
une digue (5) pour former une zone de culture (3) de la mer séparée de la pleine mer (2) ;
un équipement de porte d'écluse (6) constituant une partie de la digue (5), l'équipement de porte d'écluse (6) étant capable de mettre en communication la zone de culture (3) avec la pleine mer et d'enfermer la zone de culture (3) vis-à-vis de la pleine mer ; et
un pilote pour commander l'équipement de porte d'écluse (6) ;
**caractérisée en ce que** le système de culture comprend en outre
une unité de contrôle de porte d'écluse (22) pour commander le pilote, incluant une mémoire (22a) qui stocke un calendrier de l'activité des marées en fonction d'un tableau des marées, et un horodateur (22b),
où l'unité de contrôle de la porte d'écluse (22) est configurée pour déplacer une porte d'écluse (6a) de l'équipement de porte d'écluse (6) vers le haut et vers le bas de sorte que la porte d'écluse (6a) est ouverte/fermée sur la base du calendrier de l'activité des marées.

11. Système de culture (3) pour des organismes à cultiver (8) selon la revendication 10, comprenant en outre un détecteur de température (26) pour détecter une température de l'eau de la zone de culture (3),
dans lequel l'unité de contrôle de la porte d'écluse (22) est configurée pour contrôler, sur la base d'un signal de détection du détecteur de température (26), l'ouverture et la fermeture de l'équipement de porte d'écluse (6) de sorte à rallonger ou raccourcir une durée pour un état sec comparativement à une durée de base prédéterminée.
